# EUROPEAN PATENT APPLICATION

(11) **EP 4 295 972 A1**
(43) Date of publication of application: **27.12.2023**
(21) Application number: 22180924.7
(22) Date of filing: 24.06.2022
(51) Int. Cl.: B22F 3/00, B22F 10/28, B22F 12/00, B22F 12/30, B29C 64/153, B29C 64/259, B29C 64/30, B33Y 30/00, B33Y 40/00, F16B 21/02, B65D 90/00

(54) **APPARATUS FOR ADDITIVE MANUFACTURING, HAVING AN EASILY CONNECTABLE CONTAINER**

(71) Applicant: TRUMPF Additive Manufacturing Italia S.r.l., 36015 Schio (VI) (IT)
(72) Inventor: Panozzo, Silvio, 36013 Piovene Rocchette cap, Vicenza (IT)
(74) Representative: Trumpf Patentabteilung

(57) **Abstract**

The invention relates to an apparatus for additive manufacturing of a workpiece with a laser beam. Preferably, the apparatus is designed to build up the workpiece in layers, each layer consisting of powder which is at least locally connected by the laser beam. The workpiece can be manufactured in a container (18) of a first container arrangement (14) with a lowerable and liftable holder, and the powder can be provided from another container of a second container arrangement. At least one of the container arrangements (14) can be mounted and demounted, in particular tool-free, to/from a process chamber (12) of the apparatus. Mounting and demounting can be achieved via a first connection (26), comprising a first threaded part (32) and a fitting second threaded part (34). The threaded parts (32, 34) allow for a limited rotation of the container arrangement (14) with respect to the process chamber (12) for mounting and demounting of the container arrangement (14) to/from the process chamber (12). Preferably, the first threaded part is built in a flange (30) of the process chamber (12) and/or the second threaded part (34) is built in a ring (36) that can be turned at the top of the container arrangement (14).

## Description

### Background of the invention

The invention relates to an apparatus for additive manufacturing of a workpiece with a laser beam, wherein the apparatus comprises the following:
a) a process chamber with a first opening;
b) a first container arrangement with a container, wherein the container arrangement is releasably connected to the process chamber via a first connection in the area of the first opening.

Such an apparatus is known to the applicant.

Installation of the container arrangement is often cumbersome due to the fact that the first container arrangement may be heavy but - nevertheless - has to be connected to the process chamber in a tight manner.

### Object of the invention

It is therefore an object of the invention to provide an apparatus with a first container arrangement that can both be easily and tightly installed by an operator.

### Description of the invention

This object is solved according to the invention by an apparatus according to claim 1. The dependent claims represent preferred further embodiments.

Thus, the object of the invention is solved by an aforementioned apparatus, wherein the first connection comprises a first threaded part on the process chamber in the area of the first opening and a second threaded part - which fits to the first threaded part - on the first container arrangement. In order to attach and detach the first container arrangement to/from the process chamber, the first connection is built for limited rotation of less than 180° of - at least a part of - the first container arrangement with respect to the process chamber. The limited rotatability of the first connection in the form of a threaded joint allows for both ease of use and high tightness.

The threaded parts can be part of a first connection in form of a bayonet lock. However, preferably, the threaded parts are not part of a bayonet lock in order to simplify the design of the device.

The first opening is preferably situated at the bottom of the process chamber.

Further preferred, the first threaded part is in the form of an externally threaded part and the second threaded part is in the form of an internally threaded part. This allows for a large cross section of the container.

In order to increase usability of the apparatus, the first container arrangement is - at least partly - turnable less than 100° with respect to the process chamber. Further preferred, the container arrangement is at least partly turnable less than 80°.

The apparatus may comprise a ring that can be rotated (at least to a limited extend), wherein the ring comprises one of the threaded parts, i.e. the first threaded part or the second threaded part. By that, there is no need for an operator to rotate the container. She/he has to rotate the ring only, which further enhances usability of the first connection.

The ring may be kept captively (undetachable) on the container.

The ring preferably comprises the second threaded part.

Enhanced turning of the ring may be achieved by a lever that is attached to the ring.

Construction space in the interior of the apparatus can be saved, when the lever comprises a joint that allows for kinking of the lever.

The container may comprise a handle. In particular, the handle may extend essentially vertically in the mounted state of the container.

The container may at least partly be made of glass. By that, the operator of the apparatus is able to view inside the container without detaching it.

Manufacture and assembly are facilitated, when the first connection comprises a flange, mounted on a process chamber body, wherein the flange comprises the first threaded part.

The container of the first container arrangement is preferably built as a workpiece-container or a powder-container.

The process chamber may have a second opening and the apparatus may comprise a second container arrangement with a container, wherein the second container arrangement can be mounted to the process chamber via a second connection in the area of the second opening. The second connection comprises a first threaded part on the process chamber in the area of the second opening and a second threaded part - which fits to the first threaded part - on the second container arrangement. In order to attach and detach the second container arrangement to/from the process chamber, the second connection is built for limited rotation of less than 180° of - at least a part of - the second container arrangement with respect to the process chamber. The limited rotatability of the second connection in the form of a threaded joint allows for both ease of use and high tightness.

The second opening is preferably situated in the bottom of the process chamber.

In a particularly preferred embodiment of the apparatus, the second container arrangement is constructed identically to the first container arrangement and the second connection is constructed identically to the first connection.

The advantages according to the invention are particularly beneficial, when the apparatus is constructed for powder bed based manufacturing of the workpiece.

The container of the first container arrangement is in particular built as a workpiece container and the container of the second container arrangement is in particular built as a powder-container.

Further preferred, the process chamber is designed as a glovebox.

Further advantages of the invention can be seen in the description and the drawing. Likewise, the above-mentioned features and those described in more detail can be applied individually or in any combination in accordance with the invention. The embodiments shown and described are not to be understood as a conclusive list, but rather have an exemplary character for the description of the invention.

### Detailed description of the invention and drawing

- Fig. 1: shows a perspective view of a part of an apparatus for additive manufacturing of a workpiece with a laser beam, wherein the apparatus comprises at least two containers, which are connected according to the invention to a process chamber of the apparatus.
- Fig. 2: shows a perspective view of a part of the apparatus according to fig. 1, wherein one of the containers is detached from the process chamber.
- Figs. 3: shows a cross section of the apparatus according to fig. 1 in the area of the connection of one of the containers to the process chamber.

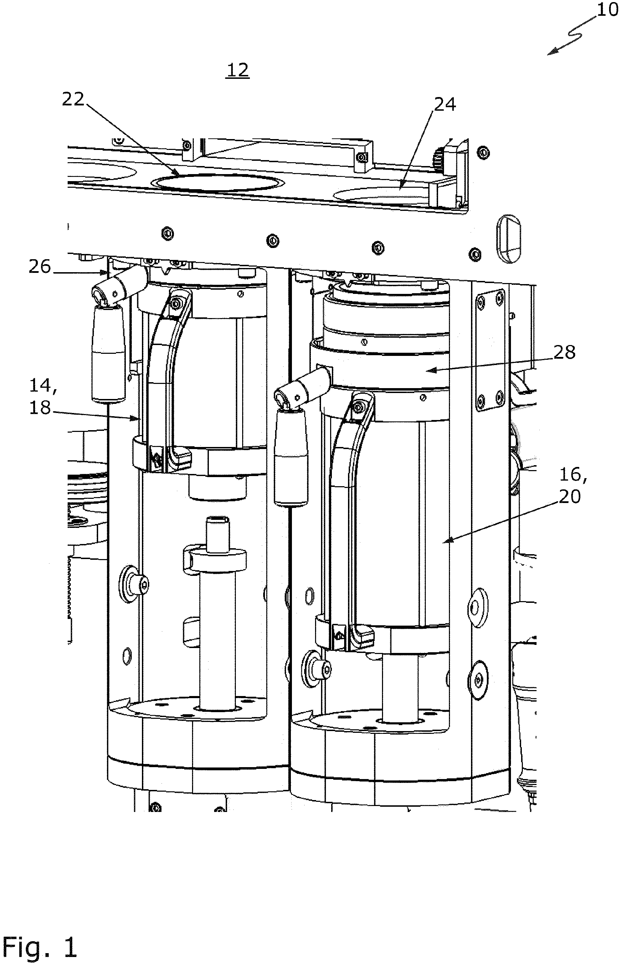

**Fig. 1** shows an apparatus **10** for additive manufacturing, in particular powder bed based additive manufacturing, of a workpiece with a laser beam. The apparatus 10 comprises a process chamber **12,** a first container arrangement **14** and a second container arrangement **16.** The first container arrangement 14 comprises a container **18,** which is built as a workpiece container. The second container arrangement 16 comprises a container **20,** which is built as a powder-container. The first container arrangement 14 and the second container arrangement 16 may be constructed identically.

The containers 18, 20 are each connected to the process chamber 12, aligning with a first opening **22** and a second opening **24,** respectively. The first container arrangement 14 is connected to the process chamber 12 via a first connection **26.** The second container arrangement 16 is connected to the process chamber 12 via a second connection **28.** In fig. 1, the first container arrangement 14 is connected to the process chamber 12, the second container arrangement 16 is disconnected from the process chamber 12.

Hereafter, the first container arrangement 14 and its first connection 26 to the process chamber 12 are described in detail.

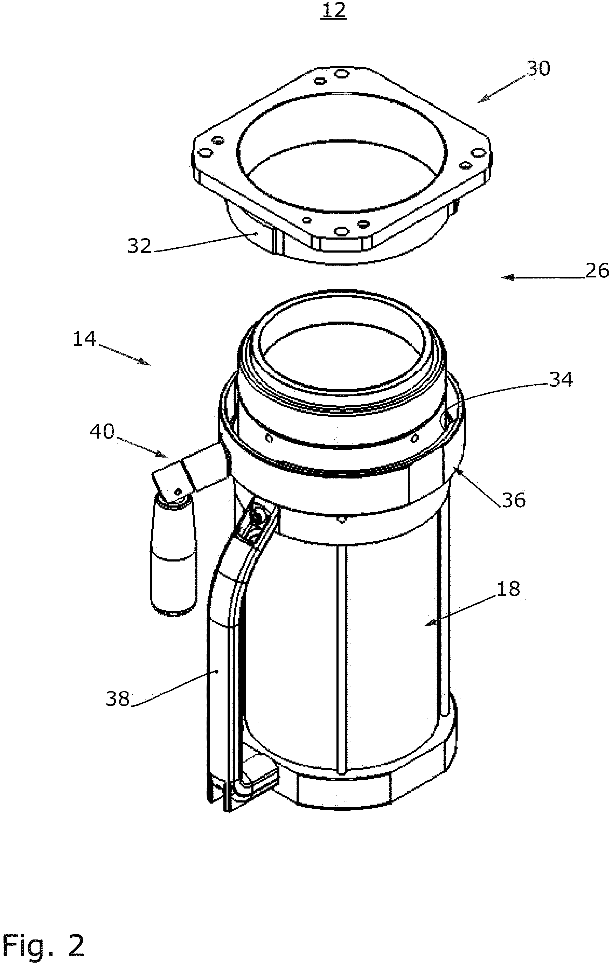

**Fig.** 2 shows the first container arrangement 14 and the first connection 26 to the process chamber 12. In fig. 2, a flange **30** of the process chamber 12 is shown. The flange 30 comprises a first threaded part **32** that fits (matches) to a second threaded part **34** of the first container arrangement 14. The second threaded part 34 is built in a ring **36** of the first container arrangement 14.

The ring 36 can be rotated, at least to a limited extend, around the container 18. The container 18 comprises a handle **38.** An operator may hold the container 18 with one hand at the handle 38. With the other hand, she/he may turn the ring 36, in particular by using a lever **40.** The lever 40 may - as shown in fig. 2 - be kinkable in order to save space, when the lever 40 is not in use.

Additionally or alternatively, the container 18 is at least partly built transparently, e.g. with a glas window.

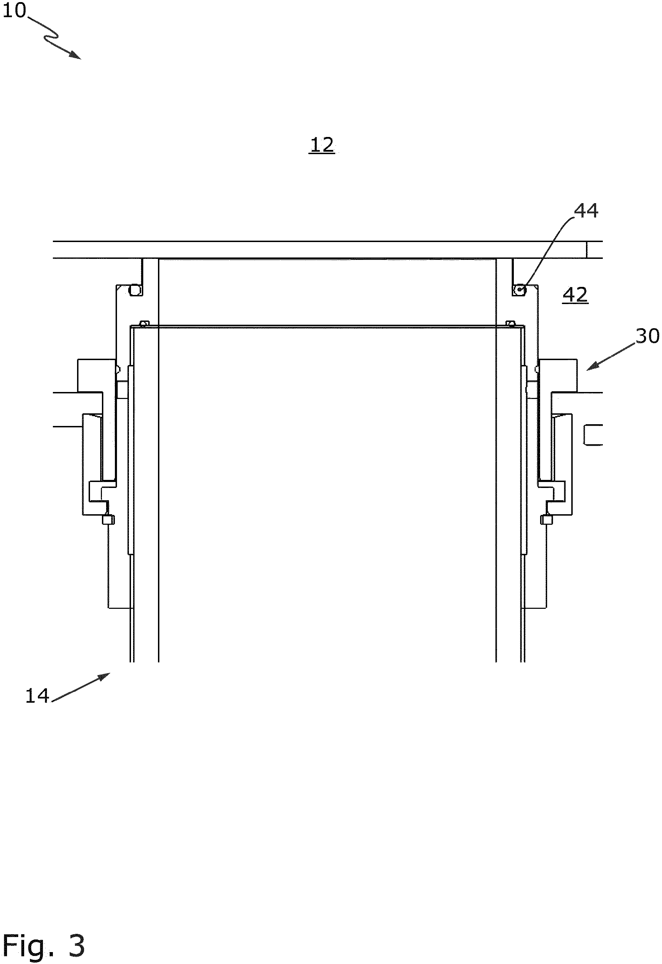

**Fig.** 3 shows the apparatus 10 with the process chamber 12 and the first container arrangement 14. Fig. 3 shows the flange 30 being mounted on a process chamber body **42.** The first container arrangement 14 is sealed towards the process chamber 12 via a gasket **44.**

Taking a synopsis of all the figures in the drawing, the invention relates in summary to an apparatus 10 for additive manufacturing of a workpiece with a laser beam. Preferably, the apparatus 10 is designed to build up the workpiece in layers, each layer consisting of powder which is at least locally connected by the laser beam. The workpiece can be manufactured in a container 18 of a first container arrangement 14 with a lowerable and liftable holder, and the powder can be provided from another container 20 of a second container arrangement 16. At least one of the container arrangements 14, 16 can be mounted and demounted, in particular tool-free, to/from a process chamber 12 of the apparatus 10. Mounting and demounting can be achieved via a first connection 26, comprising a first threaded part 32 and a fitting second threaded part 34. The threaded parts 32, 34 allow for a limited rotation of the container arrangement 14, 16 with respect to the process chamber 12 for mounting and demounting of the container arrangement 14, 16 to/from the process chamber 12. Preferably, the first threaded part is built in a flange 30 of the process chamber 12 and/or the second threaded part 34 is built in a ring 36 that can be turned at the top of the container arrangement 14, 16.

### List of reference signs

- 10: apparatus
- 12: process chamber
- 14: first container arrangement
- 16: second container arrangement
- 18: container
- 20: container
- 22: first opening
- 24: second opening
- 26: first connection
- 28: second connection
- 30: flange
- 32: first threaded part
- 34: second threaded part
- 36: ring
- 38: handle
- 40: lever
- 42: process chamber body
- 44: gasket

## Claims

1. Apparatus (10) for additive manufacturing of a workpiece with a laser beam, the apparatus (10) comprising the following:
a) a process chamber (12) through which the laser beam is radiated, the process chamber (12) having a first opening (22) in its interior;
b) a first container arrangement (14), which is detachably mounted in the area of the edge of the first opening (22) via a first connection (26), wherein the first container arrangement (14) comprises a container (18);
**characterized in that**
the first connection (26) comprises a first threaded part (32) in the area of the edge of the first opening (22) and a second threaded part (34) on the first container arrangement (14), wherein the first connection (26) allows for limited turning of at least a part of the first container arrangement (14) of less than 180° for attaching/detaching the first container arrangement (14) to/from the process chamber (12).

2. The apparatus of claim 1, wherein the first threaded part (32) is in the form of an externally threaded part and the second threaded part (34) is in the form of an internally threaded part.

3. The apparatus according to any of the preceding claims, wherein the first container arrangement (14) at least partly is turnable less than 100° for attaching/detaching the first container arrangement (14) to/from the process chamber (12).

4. The apparatus according to any of the preceding claims, wherein the first connection (26) comprises a ring (36), which can be turned at least to a limited extend, wherein the ring (36) comprises the first threaded part (32) or the second threaded part (34).

5. The apparatus according to claim 4, wherein the first container arrangement (14) comprises the ring (36), which is mounted at least limitedly turnable on the container (18), wherein the ring (36) comprises the second threaded part (34).

6. The apparatus according to claim 4 or 5, wherein the first connection (26) comprises a lever (40) attached to the ring (36) for enhanced turning of the ring (36).

7. The apparatus according to claim 6, wherein the lever (40) is kinkable.

8. The apparatus according to any of the preceding claims, wherein the container (18) comprises a handle (38).

9. The apparatus according to any of the preceding claims, wherein the container (18) is partly made of glass.

10. The apparatus according to any of the preceding claims, wherein the first connection (26) comprises a flange (30), which is mounted on a process chamber body (42) of the process chamber (12), the flange (30) comprising the first threaded part (32).

11. The apparatus according to any of the preceding claims, wherein the container (18) is built as
i) a workpiece-container having a holder on which a workpiece can be placed during its manufacture; or
ii) a powder-container for providing powder into the process chamber (12).

12. The apparatus according to any of the preceding claims, wherein the process chamber (12) has a second opening (24) in its interior and the apparatus (10) comprises a second container arrangement (16), which is detachably mounted in the area of the edge of the second opening (24) via a second connection (28), wherein the second container arrangement (16) comprises a container (20), wherein the second connection (28) comprises a first threaded part (32) in the area of the edge of the second opening (24) and a second threaded part (34) on the second container arrangement (16), wherein the second connection (28) allows for limited turning of at least a part of the second container arrangement (16) of less than 180° for attaching/detaching the second container arrangement (16) to/from the process chamber (12).

13. The apparatus according to claim 12, wherein the second container arrangement (16) is built like the first container arrangement (14) and the second connection (28) is built like the first connection (26).

14. The apparatus according to any one of the preceding claims, in which the apparatus (10) is designed for powder bed based manufacturing of the workpiece.

15. The apparatus according to any one of the preceding claims, wherein the process chamber (12) is configured as a glovebox.
